# EUROPEAN PATENT SPECIFICATION

(11) **EP 0 436 366 B1**
(45) Date of publication and mention of the grant of the patent: **15.11.1995**
(21) Application number: 90314100.0
(22) Date of filing: 21.12.1990
(51) Int. Cl.: B60N 2/06

(54) **Vehicle seat slide**
Fahrzeugsitzgleitführung
Glissière de siège de véhicule

(30) Priority: 04.01.1990 GB 9000181
(43) Date of publication of application: 10.07.1991
(73) Proprietor: Dunlop Cox Ltd, Nottingham NG8 4GP (GB)
(72) Inventor: Babbs, Frederick William, Radcliffe on Trent, Nottingham NG12 2JG (GB)
(74) Representative: Treves, Barry William

(56) References cited:
- DE-A- 3 030 725
- DE-A- 3 631 810
- FR-A- 2 380 462
- FR-A- 2 595 594
- GB-A- 2 090 127
- GB-A- 2 108 836
- see file.

## Description

This invention relates to vehicle seat slides as are provided for the mounting and fore-and-aft adjustment of the seat of a motor car or other vehicle. Such slides comprise a fixed slide member arranged to be fixed to the floor of a vehicle and a movable slide which forms part of or is arranged to be attached to the body of a vehicle seat and slidably retained with respect to the fixed slide member. Such seat slides are generally used in pairs and positioned adjacent opposite sides of a vehicle seat.

In European application No. 84300266.8 (Publication No. EP-A-0 114 740) there is disclosed a vehicle seat slide having a construction such that over those parts of the members which interfit, the shape and configuration of the fixed member is the same as that of the movable member, one being inverted with respect to the other. This similarity of shape and configuration is advantageous in that manufacture is facilitated.

The slide members are interfitted by longitudinal sliding and define three elongate spaces or races one above the other, on each of which there are two or more balls. In fact, there are two balls in the upper and lower races, one at the front and one at the rear, and three larger balls in the central race, one at the front and two at the rear where the loads tend to be higher.

The construction of the seat slide shown in Figure 3 of EP-A-0 114 740 is such that the weight of the movable member and of the seat and user is transmitted to the fixed member primarily through the larger balls in the central race whilst the primary function of the smaller balls is to ensure lateral stability and to eliminate rocking and play. However the contact area of the large balls is inherently relatively low and the contact pressures between the large balls and the slide members is therefore relatively high which results in considerable wear and potentially in a reduced service life.

It has also been found that under the loads applied in use the slide members tend to distort and/or separate from one another and from the balls in the races thus causing unwanted rattling. The teeth of a locking trigger forming part of the mechanism for adjusting the seat position also tend to bind in their notches because of the distortion.

FR-A-2 380 462 discloses a vehicle seat slide according to the pre-characterising part of Claim 1. However the two ball races on which the upper member is supported and which are supported by the lower member, and are therefore load-bearing, are separated by a considerable transverse distance. Two further ball races are thus necessary to provide stability rather than to support any load and the resulting structure takes up a considerable space below the vehicle seat.

It is the object of the present invention to provide a vehicle seat slide which has all the advantages of the constructions disclosed in the prior publications referred to above but which overcomes or reduces the disadvantages described.

In accordance with the invention a vehicle seat slide comprises an upper member and a lower member interfitted with one another in sliding relationship, the upper member being adapted to carry a seat and the lower member being adapted to be fixed to the vehicle floor, the upper member being of the same cross-sectional shape and configuration as the lower member but inverted relative thereto, over those parts of the lengths of the members which interfit, the upper member comprising two downwardly-facing surfaces forming the upper surfaces of the two ball races and being supported on a row of balls in each of the two races and the lower member comprising two upwardly-facing surfaces forming the lower surfaces of the two ball races and thereby providing support therefor, one of the two ball races being positioned above the other ball race, characterised in that a vertical plane passes through the balls in both races and in that spacer means comprising a third row of balls in a third ball race is provided between the upper member and the lower member, whereby the balls in the third ball race exert substantially only a stabilising and locating function.

Preferably one of the two ball races is positioned vertically above the other ball race, a vertical plane passing through the centre of the balls in both races.

The upper member may comprise a vertical web for carrying the seat, the web being positioned above the two downwardly-facing surfaces and preferably co-planar with the third row of balls.

Further features and details will be apparent from the following description of two embodiments of the invention given by way of example with reference to the accompanying diagrammatic drawings of which;-
- Figure 1: shows a side view of a seat slide in accordance with a first embodiment of the invention;
- Figure 2: shows a cross-section through the lower member on line II-II of Figure 1;
- Figure 3: shows a cross-section on line III-III of Figure 1;
- Figure 4: shows a cross-section on line IV-IV of Figure 1;
- Figure 5: shows a plan view of the trigger member shown in Figure 1;
- Figure 6: shows the cross-section of Figure 3 but on a much enlarged scale;
- Figure 7: shows a side view of part of a modified seat slide according to the first embodiment of the invention;
- Figure 8: shows a cross-section on line VIII-VIII of Figure 7;
- Figure 9: shows a side view of the trigger member shown in Figure 7; and
- Figure 10: shows a cross-section through part of a seat slide according to a second embodiment of the invention.

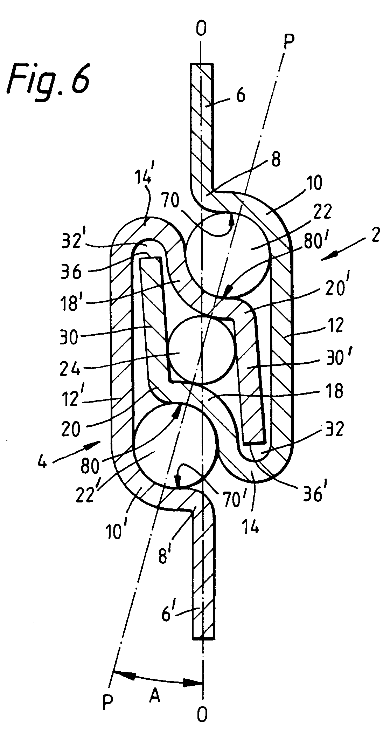

The seat slide of the first embodiment comprises an elongate movable slide member 2 slidably interfitted with a fixed slide member 4. The two slide members are typically formed from slightly resilient steel sheet or strip of substantially constant thickness by conventional metal forming techniques to have the same shape and configuration, so as to define the symmetrical interfitting arrangement shown. The shape and configuration of the interfitting part of the upper member is inverted with respect to that of the lower member. The upper movable slide member includes a vertical web 6 (see Figure 6) which, in use, forms part of, or carries the body of a vehicle seat. Below the web 6 is a sharp bend 8 through 90° in one sense which is followed by a gentler bend 10, also through 90° but in the opposite sense. Below the bend 10 is a web 12 and this is followed by a bend 14 through 180°, also in the opposite sense. This is followed in turn by a bend 18 in the one sense and a further bend 20 in the opposite sense both through substantially 90°. A flange 30 extends from the bend 20 to end in the groove 32 defined radially inwards of bend 14.

The shape of the fixed slide member is the same as that of the movable member but inverted relative thereto, and the same reference numbers, but each having a superscript, are used in the drawings. The lower vertical web 6' is adapted to be connected, directly or indirectly, to the floor of the vehicle by means of end brackets 17, 19. The lower web 6' and the upper web 6 are co-planar.

An upper ball race is defined between the downwardly-facing surface 70 beneath the bend 10 and the upwardly facing surface 80' above the bend 18' of the upper, movable and lower, fixed slide members, respectively. A lower ball race is defined between the downwardly facing surface 80 beneath the bend 18 and the upwardly facing surface 70' above the bend 10' of the upper, movable and lower, fixed slide members, respectively. A central ball race is defined between the bends 20 and 20' of the two slide members, including the facing surfaces of the flanges 30, 30' of the two members. The upper and lower ball races accommodate balls 22 and 22' respectively, typically one at the front and two at the rear of the slide and the central ball race accommodates slightly smaller balls 24, typically one at the front and one at the rear. The line defined by the centres of the balls 24 in the central race lies within the plane 0-0 defined by the upper web 6 and the lower web 16.

Due to the fact that the downwardly facing surface 70 of the first or uppermost bends 8 and 10 in the movable slide member 2 engages the tops of the balls 22 in the upper ball race, the downwardly facing surface 80 of bend 18 in the movable slide member engages the tops of the balls in the lower ball race and the upwardly facing surface 70' of the corresponding bends 8' and 10' in the fixed slide member 4 engages the undersides of the balls 22' in the lower ball race,and the upwardly facing surface 80' of bend 18' in the fixed slide member engages the undersides of the balls in the upper ball race, the weight of the seat and its user is transmitted principally through the balls 22 and 22' in the upper and lower races. The balls 24 in the central ball race exert substantially only a stabilising and locating function. The lines defined by the centres of the three rows of balls in the races lie in the same plane P-P which is tilted at an angle A of about 16° to the vertical as shown in Figure 6. The limbs of the slide members are somewhat prestressed, i.e. they are deformed from their natural shape by the balls 22, 22' 24, which may be of steel, which helps to ensure that the entire slide remains rattlefree and that the balls rotate and do not slide when the slide members move relative to one another. The positioning of the edges 36, 36' of the flanges 30, 30' in the grooves 32, 32' provides additional safety and strength should the slide be subjected to excessive forces e.g. when the vehicle is in a collision, and helps prevent the two members separating.

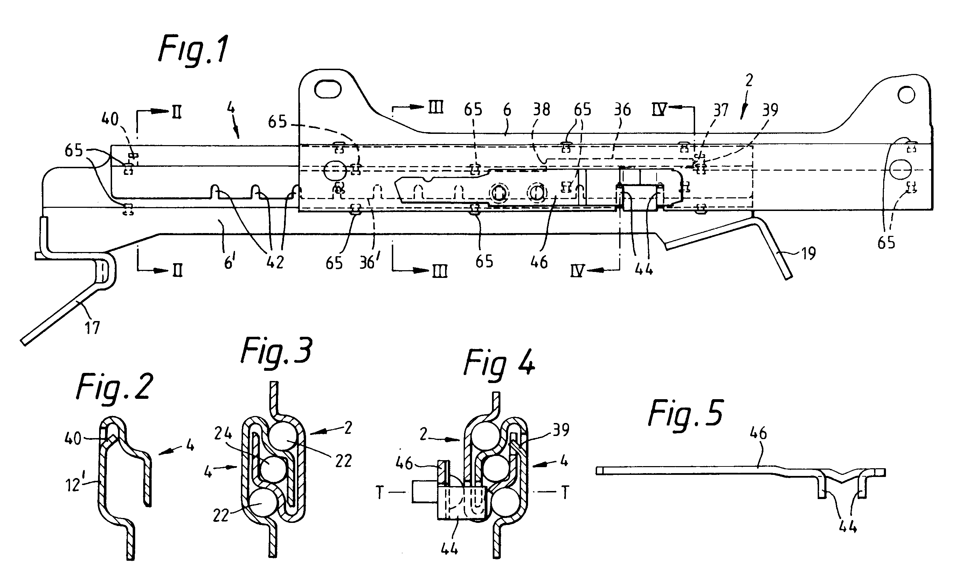

As shown in Figures 1-5 the upper edge 36 of the flange 30 of the upper slide member (which is shown in its rearmost position) is formed with two vertical shoulders 37, 38 which respectively engage with one of two tags 39, 40 formed in the web 12 of the lower member 4 and bent inwardly into the path of the upper edge 36 of the flange 30 in the upper member, thereby limiting the amount of fore-and-aft movement of the seat carried on the upper slide member 2. The movement of the balls 22, 22' 24 in the races is limited by appropriately positioned pop-rivets 65 or dimples (not shown) in the upwardly and downwardly facing surfaces of the three ball races.

The actual position of the upper slide member (and the seat carried thereon) depends on which two adjacent notches of a series of notches 42 formed along the lower edge 36' of the flange 30' of the lower slide member is engaged by two teeth 44 formed in a spring-biassed trigger member mounted on the upper member 4.

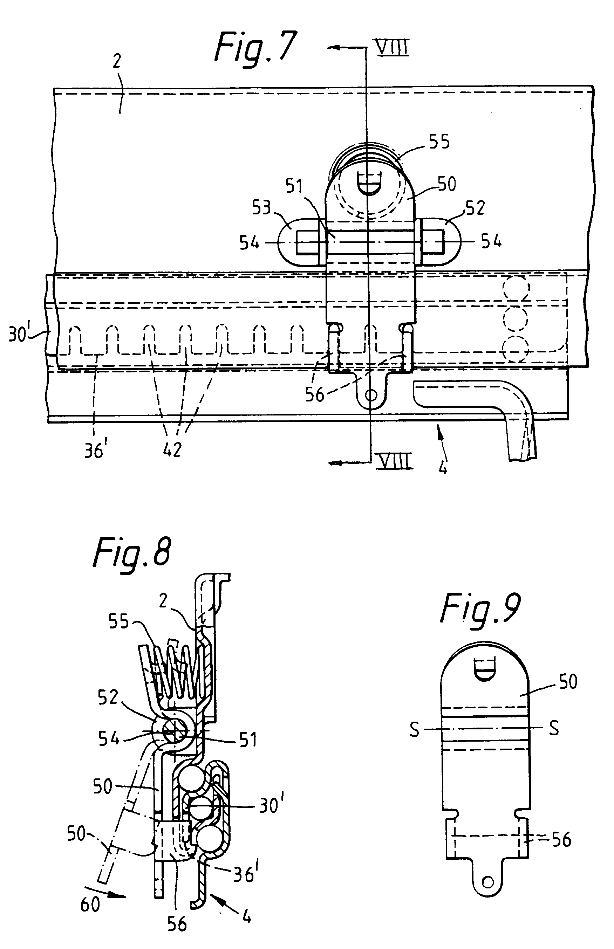

Two forms of trigger member are shown; the first, shown in Figures 1, 4 and 6 comprises a flat lever 46 formed with two teeth 44 extending perpendicularly to the plane of the lever, mounted to a pivot about a horizontal axis T-T perpendicular to the plane of the seat side (see Figure 4). A spring (not shown) biasses the teeth 44 generally upwardly into the notches 42. The second form of trigger member is shown in Figures 7, 8 and 9 and comprises a plate 50 mounted on a spindle 51 supported by two brackets 52, 53 to pivot about a horizontal axis S-S parallel to the fore-and-aft direction of movement of the slide. A powerful spring 55 biasses the teeth 56 formed at the bottom of the plate into the notches 42 formed along the lower edge 36' of the flange 30' as indicated by the arrow 60 in Figure 8.

The operation and construction of both forms of trigger member are more fully described in European Patent Application No. 90308271.7 (corresponding to Japanese Patent Application No. 205928/90 and to United States of America Patent Application No. 07/559,058) and the content of this prior application is incorporated herein by reference.

In use of the slide it is found that due to the provision of two load bearing ball races i.e. the upper and lower, there is less wear compared with the construction disclosed in EP-A-0114740 and service life is extended. Further it is found that if sideways forces are applied to the upper web 6 then the twisting or distortion which might otherwise occur is prevented. For example, if a clockwise force (as in Figure 6) is applied to the upper web 6, the upper slide tends to rotate about the balls in the upper race but is prevented from doing so by the reaction of the balls in the lower race. If an anti-clockwise force is applied to the upper web 6 the upper slide tends to rotate about the balls in the upper ball race but is prevented from doing do by the reaction of the balls in the centre ball race.

As is conventional, two such slides will in practice be used together at opposite sides of a vehicle seat to provide the seat slide mechanism. The slides are arranged so that the tilt angle A of the three rows of balls in one slide is in the opposite sense to the same tilt angle in the slide on the other side of the seat for reasons of symmetry.

In a modified form of this first embodiment the slide is not provided with a row of balls 24 in a centre race but instead spacers in the form of hard plastic strips each of U-shaped cross-section are provided in the grooves 32 and 32' above and below the bends 14 and 14' respectively. The strips engage the associated edges 36 and 36' of the flanges 30 and 30' allowing relative sliding of the upper and lower members but at the same time preventing unwanted metal-to-metal contact. Alternatively the edges 36 and 36' may be covered with a coating of a plastic such as polytetrafluoroethylene again to allow sliding and prevent metal-to-metal contact. Both strip and coating provide lateral stability for the two members.

The seat slide of the second embodiment comprises an upper member 102 capable of carrying the vehicle seat and a lower member 104 capable of being fixed to the vehicle floor. The upper member is slidably movable in a fore-and-aft direction with respect to the lower member.

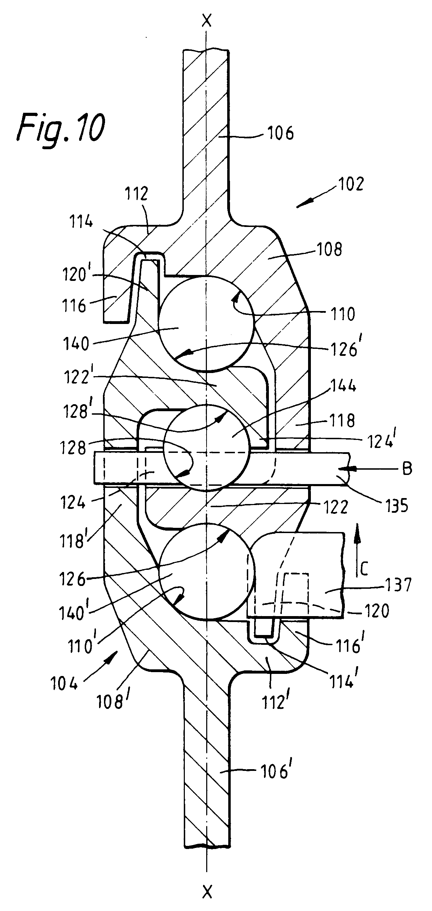

Both members are made by extruding aluminium alloy to have the same cross-sectional configurations. When the two members are in interfitting arrangement, as shown in Figure 10, the upper member is inverted with respect to the lower member.

The upper member is extruded to comprise an uppermost vertical web 106, which forms part of, or carries, the vehicle seat in use. Below the web 106, on one side (the right-hand as shown in Figure 10) of the vertical centre-plane X-X, is a shoulder 108 on the underside of which is curved surface 10 extending over approximately 90° arc angle forming the downward facing surface of an upper ball race. On the other side (the left-hand as shown in Figure 10) of the centre-plane there is an outwards-projecting web 112 on the underside of which is a shallow groove 114. On the outer edge of the web is a downwards-projecting flange 116, the inner side of which forms the outer side of the groove 114.

Beneath the shoulder 108 is a downwards-projecting web 118 which ends in a narrow slightly tapered downwardly-projecting flange 120. Projecting from the web 118 generally horizontally towards and across the centre-plane X-X is a shelf 122 having an upwardly-projecting flange 124. The underside of the shelf and the side of the flange 120 facing the centre-plane X-X is formed with a curved surface 126 extending over approximately 120° of arc to form the upper surface of a lower ball race. The upper side of the shelf 122 and the side of the flange 124 facing the centreplane X-X is formed with a curved surface 128 extending over approximately 120° of arc to form the lower surface of a central ball race.

The lower member 104 has the same configuration as the upper member 102 and the same reference numerals, but with superscripts, have been used to indicate corresponding features. However as stated above, the lower member is inverted with respect to the upper.

It will be appreciated that as in the first embodiment the loads applied to the seat slide in use are carried on three balls 140 and 140' arranged in each of the upper and lower ball races respectively, while the two balls 144 in the central race act as stabilising spacers especially against forces applied sideways. In this embodiment the lines of the ball centres in each race are in a single vertical plane, and co-planar with the plane of the centres of the upper and lower webs, i.e. all lie in the plane X-X.

The flanges 120 and 120' on the upper and lower members respectively locate in, but do not touch the sides of, the respective grooves 114' and 114 in the lower and upper members. This arrangement is for added strength and safety to prevent the slide members separating in an overload situation such as may occur if the vehicle is involved in a collision.

The upper member of the second embodiment, like the upper member of the first embodiment, may carry a trigger member having teeth for engaging in suitable notches in the seat slide and thereby define the position of the upper movable member with respect to the lower, fixed member. The teeth shown by reference numerals 135 and 137 in Figure 10 may enter from the side as shown by arrow 15 or from below as shown by arrow C by means of mechanisms similar to those shown in Figure 1 (for tooth movement from below) and Figure 7 (for tooth movement from the side).

A seat slide in accordance with the invention is easy to fix to the floor and it is also easy to have a seat fixed to it. The mechanism for positioning the upper member with respect to the lower is readily incorporated especially as the fixed, lower member can readily be provided with notches or similar apertures without interfering with the ball tracking paths. The upper and lower webs are suitable for carrying other mechanisms e.g. a seat height adjustment mechanism, seat belt anchorages etc. The loads applied to the slide in use tend to hold the upper and lower members together, rather than causing them to separate.

The symmetrically inverted members achieve perfect structural balance since the moment of inertia of each is the same and the tendency to separate will be resisted equally by both.

## Claims

1. A vehicle seat slide comprising an upper member (2;102) and a lower member (4;104) interfitted with one another in sliding relationship, the upper member (2;102) being adapted to carry a seat and the lower member (4;104) being adapted to be fixed to the vehicle floor, the upper member (2;102) being of the same cross-sectional shape and configuration as the lower member (4;104) but inverted relative thereto, over those parts of the lengths of the members which interfit, the upper member (2;102) comprising two downwardly-facing surfaces (70,80;110,126) forming the upper surfaces of two ball races and being supported on a row of balls, (22,22';140,140') in each of the two races and the lower member (4;104) comprising two upwardly-facing surfaces (70',80';110'126') forming the lower surfaces of the two ball races and thereby providing support therefor, one of the two ball races being positioned above the other ball race, characterised in that a vertical plane passes through the balls (22,22';140,140') in both races and in that spacer means comprising a third row of balls (24;144) in a third ball race is provided between the upper member (2;102) and the lower member (4;104), whereby the balls (24;144) in the third ball race exert substantially only a stabilising and locating function.

2. A vehicle seat slide according to Claim 1 characterised in that one of the two ball races is positioned vertically above the other ball race, a vertical plane passing through the centres of the balls (22,22';140,140') in both races.

3. A vehicle seat slide according to either Claim 1 or Claim 2 characterised in that means (30,30';120,120') are provided to prevent unwanted separation of the members on application of an excessive force thereto.

4. A vehicle seat slide according to Claim 1 characterised in that the third ball race is positioned between the two ball races.

5. A vehicle seat slide according to any one of the preceding claims characterised in that the upper member (2;102) comprises a vertical web (6;106) for carrying the seat, said web (6;106) being positioned above the two downwardly-facing surfaces (70,80;110,126).

6. A vehicle seat slide according to Claim 4 characterised in that the upper member (2;102) comprises a vertical web (6;106) for carrying the seat positioned vertically above and co-planar with the centres of the balls (24;144) in the third ball race.

7. A vehicle seat slide according to Claim 4 characterised in that the lines defined by the centres of the balls (22,22',24;140,140',144) in the three ball races are co-planar.

8. A vehicle seat slide according to Claim 6 characterised in that the plane containing the lines defined by the centres of the balls (22,22',24;140,140',144) in the three races is co-planar with the plane of the vertical web (6;106) of the upper member.

9. A vehicle seat slide according to Claim 6 or 8 characterised in that the lower member (4;104) comprises a vertical web (6';106') for securing the slide to the vehicle floor, the vertical web (6';106') of the lower member 4;104) being co-planar with the vertical web (6;106) of the upper member (2;104).

10. A vehicle seat slide according to any one of the preceding claims characterised in that the thickness of the metal strips of which the upper and lower members (2,4;102,104) are comprised is substantially constant.

11. A vehicle seat slide according to any one of the preceding claims characterised in that a flange (30,30';120,120') and a groove (32,32';114,114') is formed on each of the two members (2,4;102,104), the flange (30 or 30';120 or 120') of one member (2 or 4;102 or 104) being located within the groove (32' or 32;114' or 114) of the other member (4 or 2; 104 or 102) and alongside one of the upper and lower balls races respectively.

12. A vehicle seat slide according to Claim 11 characterised in that the flanges (30,30';120,120') do not touch the sides of the respective grooves (32'32;114',114) within which they are located.

13. A vehicle seat slide according to Claim 4 characterised in that the third ball race is positioned between a flange (30;124) of the upper member (2;102) and a flange (30';124') of the lower member (4;104).

14. A vehicle seat slide according to any one of Claims 1-4 characterised in that each member has a generally "U"-shaped cross-section, the "U" of the upper member (3) being upright and the "U" of the lower member (4) being inverted, with two limbs extending from a central bend (14,14'), the first limb having a first vertically-extending section (12,12') extending from the central bend (14,14') and a first generally horizontally-extending section providing on the upper member a first one (70) of the downward-facing surfaces and on the lower member a first one (70') of the upward-facing surfaces, each generally in vertical alignment with the respective bend (14,14'), the second limb having a first vertically-extending portion adjacent the bend (14,14'), a vertically-extending flange (30,30') remote for the bend (14,14') ending in an edge (36,36') and a second generally horizontally-extending section positioned between the first vertically-extending portion and the flange (30,30') to provide on the upper member (2) a second one (80) of the downward-facing surfaces and on the lower member a second one (80') of the upward-facing surfaces.

15. A vehicle seat slide according to Claim 14 characterised in that the edge (36') of the flange (30') of the lower member (4) is positioned above and within, but not touching, the bend (14) of the upper member (2).

16. A vehicle seat slide according to Claim 14 or 15 characterised in that the edge (36) of the upper member is positioned below and within, but not touching, the bend (14') if the lower member (4).

17. A vehicle seat slide according to any one of Claims 14 to 16 characterised in that an upwardly-extending web (6) is provided adjacent the first one (70) of the downward-facing surfaces of the upper member (2) providing adaptation for carrying a seat and a downwardly-extending web (6') is provided adjacent the first one (70') of the downward-facing surfaces of the lower member (4) providing adaptation for fixing to the vehicle floor.

18. A vehicle seat slide according to Claim 17 characterised in that the webs (6, 6') are in vertical alignment.

## Patentansprüche

1. Eine Fahrzeugsitzgleitvorrichtung mit einem oberen Bauteil (2; 102) und einem unteren Bauteil (4; 104), die in gleitender Beziehung zusammengefügt sind, wobei das obere Bauteil (2; 102) zum Tragen eines Sitzes und das untere Bauteil (4; 104) zur Befestigung am Fahrzeugboden ausgelegt ist, das obere Bauteil (2; 102) die gleiche Querschnittsform und -konfiguration wie das untere Bauteil (4; 104) aufweist, jedoch diesbezüglich invertiert ist, und zwar über diejenigen Längenteile der Bauteile, die zusammengefügt sind, das obere Bauteil (2; 102) zwei nach unten weisende Flächen (70, 80; 110, 126) umfaßt, welche die oberen Flächen zweier Kugellager bilden und auf einer Reihe von Kugeln (22, 22'; 140, 140') in jedem der zwei Lager getragen werden, und das untere Bauteil (4; 104) zwei nach oben weisende Flächen (70', 80'; 110', 126') umfaßt, welche die unteren Flächen der zwei Kugellager bilden und dadurch Halt dafür schaffen, und das eine der zwei Kugellager über dem anderen Kugellager positioniert ist,
dadurch **gekennzeichnet,**
daß eine vertikale Ebene durch die Kugeln (22, 22'; 140, 140') in beiden Lagern verläuft, und daß ein Abstandhaltermittel, welches eine dritte Reihe von Kugeln (24; 144) in einem dritten Kugellager umfaßt, zwischen dem oberen Bauteil (2; 102) und dem unteren Bauteil (4; 104) vorgesehen ist, wobei die Kugeln (24; 144) im dritten Kugellager im wesentlichen lediglich eine stabilisierende und lokalisierende Funktion ausüben.

2. Eine Fahrzeugsitzgleitvorrichtung nach Anspruch 1,
dadurch gekennzeichnet,
daß das eine der zwei Kugellager vertikal oberhalb des anderen Kugellagers positioniert ist, wobei eine vertikale Ebene durch die Zentren der Kugeln (22, 22'; 140, 140') in beiden Lagern verläuft.

3. Eine Fahrzeugsitzgleitvorrichtung nach Anspruch 1 oder Anspruch 2,
dadurch gekennzeichnet,
daß Mittel (30, 30'; 120, 120') vorgesehen sind, um eine unerwünschte Trennung der Bauteile beim Aufbringen einer übermäßigen Kraft auf diese zu verhindern.

4. Eine Fahrzeugsitzgleitvorrichtung nach Anspruch 1,
dadurch gekennzeichnet,
daß das dritte Kugellager zwischen den zwei Kugellagern positioniert ist.

5. Eine Fahrzeugsitzgleitvorrichtung nach einem der vorhergehenden Ansprüche,
dadurch gekennzeichnet,
daß das obere Bauteil (2; 102) einen vertikalen Steg (6; 106) zum Tragen des Sitzes umfaßt, wobei der Steg (6; 106) oberhalb der zwei nach unten weisenden Flächen (70, 80; 110, 126) positioniert ist.

6. Eine Fahrzeugsitzgleitvorrichtung nach Anspruch 4,
dadurch gekennzeichnet,
daß das obere Bauteil (2; 102) einen vertikalen Steg (6; 106) zum Tragen des Sitzes umfaßt, der vertikal oberhalb der und koplanar zu den Zentren der Kugeln (24; 144) im dritten Kugellager positioniert ist.

7. Eine Fahrzeugsitzgleitvorrichtung nach Anspruch 4,
dadurch gekennzeichnet,
daß die Linien, die durch die Zentren der Kugeln (22, 22', 24; 140, 140', 144) in den drei Kugellagern definiert sind, koplanar sind.

8. Eine Fahrzeugsitzgleitvorrichtung nach Anspruch 6,
dadurch gekennzeichnet,
daß die Ebene, welche die Linien enthält, die durch die Zentren der Kugeln (22, 22', 24; 140, 140', 144) in den drei Lagern definiert sind, koplanar zur Ebene des vertikalen Stegs (6; 106) des oberen Bauteils ist.

9. Eine Fahrzeugsitzgleitvorrichtung nach Anspruch 6 oder 8,
dadurch gekennzeichnet,
daß das untere Bauteil (4; 104) einen vertikalen Steg (6'; 106') umfaßt, um die Gleitvorrichtung am Fahrzeugboden zu befestigen, wobei der vertikale Steg (6'; 106') des unteren Bauteils (4; 104) koplanar zum vertikalen Steg (6; 106) des oberen Bauteils (2; 104) ist.

10. Eine Fahrzeugsitzgleitvorrichtung nach einem der vorhergehenden Ansprüche,
dadurch gekennzeichnet,
daß die Dicke der Metallstreifen, aus denen die oberen und unteren Bauteile (2, 4; 102, 104) bestehen, im wesentlichen konstant ist.

11. Eine Fahrzeugsitzgleitvorrichtung nach einem der vorhergehenden Ansprüche,
dadurch gekennzeichnet,
daß ein Flansch (30, 30'; 120, 120') und eine Nut (32, 32'; 114, 114') auf jedem der zwei Bauteile (2, 4; 102, 104) ausgebildet sind, wobei der Flansch (30 oder 30'; 120 oder 120') des einen Bauteils (2 oder 4; 102 oder 104) jeweils innerhalb der Nut (32' oder 32; 114' oder 114) des anderen Bauteils (4 oder 2; 104 oder 102) und längs eines der oberen und unteren Kugellager angeordnet ist.

12. Eine Fahrzeugsitzgleitvorrichtung nach Anspruch 11,
dadurch gekennzeichnet,
daß die Flansche (30, 30'; 120, 120') die Seiten der jeweiligen Nuten (32', 32; 114', 114), innerhalb welcher sie angeordnet sind, nicht berühren.

13. Eine Fahrzeugsitzgleitvorrichtung nach Anspruch 4,
dadurch gekennzeichnet,
daß das dritte Kugellager zwischen einem Flansch (30; 124) des oberen Bauteils (2; 102) und einem Flansch (30'; 124') des unteren Bauteils (4; 104) positioniert ist.

14. Eine Fahrzeugsitzgleitvorrichtung nach einem der Ansprüche 1 bis 4,
dadurch gekennzeichnet,
daß jedes Bauteil einen im allgemeinen "U"-förmigen Querschnitt aufweist, wobei das "U" des oberen Bauteils (3) aufrecht steht und das "U" des unteren Bauteils (4) invertiert ist, zwei Arme sich von einem zentralen Bogen (14, 14') erstrecken, der erste Arm einen ersten, sich vertikal erstreckenden Abschnitt (12, 12'), der sich vom zentralen Bogen (14, 14') erstreckt, und einen ersten, sich im allgemeinen horizontal erstreckenden Abschnitt aufweist, der auf dem oberen Bauteil eine erste Fläche (70) der nach unten weisenden Flächen und auf dem unteren Bauteil eine erste Fläche (70') der nach oben weisenden Flächen schafft, jede allgemein in vertikaler Ausrichtung mit dem jeweiligen Bogen (14, 14'), der zweite Arm einen ersten, sich vertikal erstreckenden Teil benachbart dem Bogen (14, 14'), einen sich vertikal erstreckenden Flansch (30, 30') entfernt vom Bogen (14, 14'), der in einer Kante (36, 36') endet, und einen zweiten, sich im allgemeinen horizontal erstreckenden Abschnitt aufweist, der zwischen dem ersten, sich vertikal erstreckenden Teil und dem Flansch (30, 30') positioniert ist, um auf dem oberen Bauteil (2) eine zweite Fläche (80) der nach unten weisenden Flächen und auf dem unteren Bauteil eine zweite Fläche (80') der nach oben weisenden Flächen zu schaffen.

15. Eine Fahrzeugsitzgleitvorrichtung nach Anspruch 14,
dadurch gekennzeichnet,
daß die Kante (36') des Flansches (30') des unteren Bauteils (4) oberhalb und innerhalb des Bogens (14) des oberen Bauteils (2) positioniert ist, diesen jedoch nicht berührt.

16. Eine Fahrzeugsitzgleitvorrichtung nach Anspruch 14 oder 15,
dadurch gekennzeichnet,
daß die Kante (36) des oberen Bauteils unterhalb und innerhalb des Bogens (14') des unteren Bauteils (4) positioniert ist, diesen jedoch nicht berührt.

17. Eine Fahrzeugsitzgleitvorrichtung nach einem der Ansprüche 14 bis 16,
dadurch gekennzeichnet,
daß ein sich nach oben erstreckender Steg (6) benachbart der ersten Fläche (70) der nach unten weisenden Flächen des oberen Bauteils (2) vorgesehen ist, der eine Anpassung zum Tragen eines Sitzes schafft, und ein sich nach unten erstreckender Steg 6' benachbart der ersten Fläche (70') der nach unten weisenden Flächen des unteren Bauteils (4) vorgesehen ist, der eine Anpassung zur Befestigung am Fahrzeugboden schafft.

18. Eine Fahrzeugsitzgleitvorrichtung nach Anspruch 17,
dadurch gekennzeichnet,
daß die Stege (6, 6') vertikal ausgerichtet sind.

## Revendications

1. Glissière de siège de véhicule comprenant un élément supérieur (2 ; 102) et un élément inférieur (4 ; 104) adaptés l'un dans l'autre en relation de coulissement, l'élément supérieur (2 ; 102) étant adapté pour supporter un siège et l'élément inférieur (4 ; 104) étant adapté pour être fixé au plancher du véhicule, l'élément supérieur (2 ; 102) étant de la même forme et configuration en section transversale que l'élément inférieur (4 ; 104) mais inversé par rapport à celui-ci, pour celles des parties de la longueur des éléments qui s'adaptent l'une dans l'autre, l'élément supérieur (2 ; 102) comprenant deux surfaces orientées vers le bas (70, 80 ; 110, 126) formant les surfaces supérieures de deux chemins de roulement à billes et étant supporté sur une rangée de billes (22, 22' ; 140, 140') disposées dans chacun des deux chemins de roulement et l'élément inférieur (4 ; 104) comprenant deux surfaces orientées vers le haut (70', 80' ; 110', 126') formant les surfaces inférieures des deux chemins de roulement à billes et procurant ainsi un support pour celui-ci, l'un des deux chemins de roulement à billes étant positionné au-dessus de l'autre chemin de roulement à billes, caractérisée en ce qu'un plan vertical passe par les billes (22, 22' ; 140, 140') disposées dans les deux chemins de roulement et en ce qu'un moyen d'espacement comprenant une troisième rangée de billes (24 ; 144) disposées dans un troisième chemin de roulement à billes est prévu entre l'élément supérieur (2 ; 102) et l'élément inférieur (4 ; 104), d'où il résulte que les billes (24 ; 144) disposées dans le troisième chemin de roulement à billes n'exercent sensiblement qu'une fonction de stabilisation et de positionnement.

2. Glissière de siège de véhicule selon la revendication 1, caractérisée en ce que l'un des deux chemins de roulement à billes est positionné verticalement au-dessus de l'autre chemin de roulement à billes, un plan vertical passant par le centre des billes (22, 22' ; 140, 140') dans les deux chemins de roulement.

3. Glissière de siège de véhicule selon soit la revendication 1, soit la revendication 2, caractérisée en ce que des moyens (30, 30' ; 12, 120') sont prévus pour empêcher la séparation indésirable des éléments lors de l'application d'une force excessive à ceux-ci.

4. Glissière de siège de véhicule selon la revendication 1, caractérisée en ce que le troisième chemin de roulement à billes est positionné entre les deux chemins de roulement à billes.

5. Glissière de siège de véhicule selon l'une quelconque des revendications précédentes, caractérisée en ce que l'élément supérieur (2 ; 102) comprend une âme verticale (6 ; 106) destinée à supporter le siège, ladite âme (6 ; 106) étant positionnée au-dessus des deux surfaces orientées vers le bas (70, 80 ; 110, 126).

6. Glissière de siège de véhicule selon la revendication 4, caractérisée en ce que l'élément supérieur (2 ; 102) comprend une âme verticale (6 ; 106) destinée à supporter le siège, positionnée verticalement, en lui étant coplanaire, au-dessus du centre des billes (24 ; 144) présentes dans le troisième chemin de roulement à billes.

7. Glissière de siège de véhicule selon la revendication 4, caractérisée en ce que les lignes définies par le centre des billes (22, 22', 24 ; 140, 140', 144) présentes dans les trois chemins de roulement à billes sont coplanaires.

8. Glissière de siège de véhicule selon la revendication 6, caractérisée en ce que le plan contenant les lignes définies par le centre des billes (22, 22', 24 ; 140, 140', 144) présentes dans les trois chemins de roulement est coplanaire au plan de l'âme verticale (6 ; 106) de l'élément supérieur.

9. Glissière de siège de véhicule selon la revendication 6 ou 8, caractérisée en ce que l'élément inférieur (4 ; 104) comprend une âme verticale (6' ; 106') destinée à fixer la glissière au plancher du véhicule, l'âme verticale (6' ; 106') de l'élément inférieur (4 ; 104) étant coplanaire à l'âme verticale (6 ; 106) de l'élément supérieur (2 ; 102).

10. Glissière de siège de véhicule selon l'une quelconque des revendications précédentes, caractérisée en ce que l'épaisseur des bandes métalliques dont sont constitués les éléments supérieur et inférieur (2, 4 ; 102, 104) est sensiblement constante.

11. Glissière de siège de véhicule selon l'une quelconque des revendications précédentes, caractérisée en ce qu'une bride (30, 30' ; 120, 120') et une rainure (32, 32' ; 114, 114') sont formées sur chacun des deux éléments (2, 4 ; 102, 104), la bride (30 ou 30' ; 120 ou 120') d'un premier élément (2 ou 4 ; 102 ou 104) étant située à l'intérieur de la rainure (32' ou 32 ; 114' ou 114) de l'autre élément (4 ou 2 ; 104 ou 102) et longeant l'un des chemins de roulement à billes supérieur et inférieur, respectivement.

12. Glissière de siège de véhicule selon la revendication 11, caractérisée en ce que les brides (30, 30' ; 120, 120') ne touchent pas les côtés des rainures respectives (32', 32 ; 114', 114) à l'intérieur desquelles elles sont situées.

13. Glissière de siège de véhicule selon la revendication 4, caractérisée en ce que le troisième chemin de roulement à billes est positionné entre une bride (30 ; 124) de l'élément supérieur (2 ; 102) et une bride (30' ; 124') de l'élément inférieur (4 ; 104).

14. Glissière de siège de véhicule selon l'une quelconque des revendications 1 à 4, caractérisée en ce que chaque élément présente une section transversale généralement en forme de "U", le "U" de l'élément supérieur (3) étant debout et le "U" de l'élément inférieur (4) étant renversé, avec deux jambes s'étendant depuis une courbe centrale (14, 14'), la première jambe ayant une première partie s'étendant verticalement (12, 12') s'étendant depuis la courbe centrale (14, 14') et une première partie s'étendant généralement horizontalement procurant sur l'élément supérieur une première (70) des surfaces orientées vers le bas et sur l'élément inférieur une première (70') des surfaces orientées vers le haut, chacune généralement en alignement vertical avec la courbe respective (14, 14'), la seconde jambe ayant une première partie s'étendant verticalement à proximité immédiate de la courbe (14, 14'), une bride s'étendant verticalement (30, 30') distante de la courbe (14, 14') se terminant par un bord (36, 36') et une seconde partie s'étendant généralement horizontalement positionnée entre la première partie s'étendant verticalement et la bride (30, 30') afin de procurer sur l'élément supérieur (2) une seconde (80) des surfaces orientées vers le bas et sur l'élément inférieur une seconde (80') des surfaces orientées vers le haut.

15. Glissière de siège de véhicule selon la revendication 14, caractérisée en ce que le bord (36') de la bride (30') de l'élément inférieur (4) est positionné au-dessus de la courbe (14) de l'élément supérieur (2) et à l'intérieur de celle-ci mais sans la toucher.

16. Glissière de siège de véhicule selon la revendication 4 ou 5, caractérisée en ce que le bord (36) de l'élément supérieur est positionné au-dessous de la courbe (14') de l'élément inférieur (4) et à l'intérieur de celle-ci mais sans la toucher.

17. Glissière de siège de véhicule selon l'une quelconque des revendications 14 à 16, caractérisée en ce qu'une âme s'étendant vers le haut (6) est prévue à proximité immédiate de la première (70) des surfaces orientées vers le bas de l'élément supérieur (2) en procurant une adaptation permettant de supporter un siège et une âme s'étendant vers le bas (6') est prévue à proximité immédiate de la première (70') des surfaces orientées vers le bas de l'élément inférieur (4) en procurant une adaptation permettant de la fixer au plancher du véhicule.

18. Glissière de siège de véhicule selon la revendication 17, caractérisée en ce que les âmes (6, 6') sont en alignement vertical.
